# EUROPEAN PATENT APPLICATION

(11) **EP 3 192 372 A1**
(43) Date of publication of application: **19.07.2017**
(21) Application number: 16207488.4
(22) Date of filing: 30.12.2016
(51) Int. Cl.: A21D 8/02, A21D 17/00, A21D 13/32

(54) **SNACK PRODUCT AND METHODS FOR ITS PREPARATION**

(30) Priority: 30.12.2015 NL 2016052
(71) Applicant: Jacques' Kruidenboter B.V., 1784 NX Den Helder (NL)
(72) Inventor: VAN DER LINDE, Willem, 8016 KR Zwolle (NL)
(74) Representative: Jilderda, Anne Ayolt

(57) **Abstract**

A snack product comprises a bread dough body (10) with a pasty filling (20). The dough body comprises a pre-baked bread dough body with a weight of less than about 20 grams. The bread dough body can be baked off together with the filling in an oven and is particularly baguette-shaped or pistolet-shaped with a length of between 7 and 8 centimetres and a cross-section of around 3 centimetres. Applied as filling is for instance a neutral butter or cream cheese or a tapenade on the basis of olives, tomatoes, vegetables and/or herbs and spices.

## Description

The present invention relates to a snack product comprising an edible body with a filling.

There are snack products in diverse types and sizes. These are usually deep-fried products, wherein the 'frikandel' (minced meat hotdog) continues to enjoy the greatest popularity, followed by spring rolls and the traditional croquette in diverse varieties. Such relatively large snack products are less suitable for festivities, receptions and parties because cutlery is preferably used and these large products are less suitable as single-bite snack. To this end mini-variants of these snacks have also been developed in the form of 'mini-frikandels', mini-spring rolls, 'bitterballen' (savoury battered meatballs) and the like. These mini-variants are also deep-fried products, even in the case of the variants which are crisp-baked in the oven and for this purpose are pre-deep-fried.

A drawback of these known snacks is that the deep-frying is nowadays associated with the negative perception that deep-frying is unhealthy. Much depends in this respect on the quality, nature and freshness of the deep-frying oil or fat used for the purpose. This is out of the control of the snack manufacturer. There is moreover a need for a snack product, in particular a single-bite snack, which has a more stylish character as well as a healthier one.

The present invention has for its object, among others, to provide a snack product which meets this need, particularly in the form of a single-bite snack. A single-bite snack is understood here to mean a product which can in principle be introduced all at once into the mouth, but can be eaten in one or several mouthfuls at most, wherein cutlery is unnecessary.

In order to achieve the stated object a snack product of the type described in the preamble has the feature according to the invention that the body comprises a pre-baked bread dough body with a weight of less than about 20 grams, that the bread dough body is provided with a pasty filling and that the bread dough body can be baked off together with the filling in an oven. The invention thus provides a pre-baked mini-bread product which is baked off as such in the oven prior to serving and is of a size such that it can be consumed in one or at most several mouthfuls without cutlery. The pasty filling prevents a dry sensation in the mouth. This is therefore a mini-snack which is particularly suitable for serving during festivities, receptions and other parties and which has per se the healthy image of a bread product. The invention hereby provides a welcome change from the usually deep-fried or pre-deep-fried snacks normally served at festivities and parties.

In a preferred embodiment the snack product according to the invention has the feature that the bread dough body is elongate, in particular pistolet-shaped or baguette-shaped, and a cut is made therein at the position of the filling. This gives the snack product a stylish character of a traditionally baked baguette or pistolet in combination with a unique small size of less than 20 grams. A further embodiment of the snack product according to the invention is more particularly characterized here in that the dough body has a weight of between 15 and 18 grams, in particular a target weight of around 16.5 grams. By way of comparison, a typical 'bitterball' has a weight of about 20 grams, and is thereby of the same order of magnitude as the mini-baguette or pistolet of this embodiment of the snack product according to the invention.

The snack product according to the invention is preferably also dimensionally no larger, or hardly so, than an average 'bitterball', which normally has a diameter of 3 to 5 centimetres. A further preferred embodiment of the snack product according to the invention has in this respect the feature that the dough body has a length of between 7 and 8 centimetres, in particular a target length of around 7.5 centimetres, and a maximum width of between about 2.5 and 3.5 centimetres, in particular a target width of around 3 centimetres, and a maximum height of between 2 and 3 centimetres, in particular a target height of around 2.5 centimetres.

Diverse types of filling can per se be applied for the snack product according to the invention, in addition to savoury fillings for instance also neutral or sweet fillings based particularly on fruit or fruits. A savoury filling is however preferred together with beverages or drinks. A further particular embodiment of the snack product according to the invention has in this respect the feature that the filling comprises a savoury filling, in particular a filling comprising at least one ingredient from a group comprising butter, a blend of vegetable oils and/or fats, cream cheese and a tapenade on the basis of olives, capers, herbs and spices, vegetables and/or tomatoes.

Common to each type of filling in the snack product according to invention is a pasty, slightly liquid filling. In order to avoid the surrounding dough body thereby becoming too soggy, a specific dough composition is preferably applied which effectively resists penetration of moisture when the product is prepared. In this context a further preferred embodiment of the snack product according to the invention has the feature that the dough comprises a mixture of wheat flour, rye flour and leavening, in particular in a mixture with a proportion of 5% to 6% rye flour and a proportion of 4% to 5% leavening relative to the wheat flour. The addition of rye flour and leavening is found in practice to impart, in addition to flavour, more consistency and firmness to the dough body, whereby it seals itself against deep penetration of moisture from the filling. Externally the bread body hereby acquires a crispy crust, while the filled core has a fresh, soft and tasty consistency.

The invention also relates to a method for preparing the snack product according to the invention, wherein prior to serving a snack product according to the invention as specified above is baked off for 3 to 4 minutes in an oven at a temperature of 200 to 235 degrees Celsius. All that is thus required for preparation is a suitable oven in which the pre-baked product can be (post-)prepared in a short time in order to be served or offered while warm.

In the preparation of the snack product according to the invention use is thus advantageously made of a pre-baked semi-product. The invention therefore also relates to a method for manufacturing a snack product. This has the feature according to the invention that a bread dough body with a weight of less than about 20 grams is separated from a bread dough, that the dough body is pre-baked and that following cooling a cut is made in the pre-baked dough body which is filled with a pasty filling and subsequently frozen if desired. Because the dough body is pre-baked before being filled with the pasty filling, the filling does not dry out and, after baking off, the dough body is nicely browned and crisp-baked. Through being frozen the product has a long shelf-life and the moisture of the filling is moreover fixed therein.

Endless variations are possible for the filling, although a particularly appetizing end product is obtained with a particular embodiment of the method for manufacturing a snack product according to the invention which is characterized for this purpose in that a savoury filling is applied as filling, in particular a filling comprising at least one ingredient from a group comprising butter, a blend of vegetable oils and/or fats, cream cheese and a tapenade on the basis of olives, capers, herbs and spices, vegetables and/or tomatoes. This filling imparts a savoury character to the snack, whereby it goes particularly well with beverages or other drinks.

For the purpose of a practical single-bite or one-bite snack a further particular embodiment of the method for manufacturing a snack product according to the invention has the feature that the bread dough is formed from a mixture of wheat flour and rye flour with the addition of leavening, in particular in a mixture with a proportion of 5% to 6% rye flour and a proportion of 4% to 5% leavening relative to the wheat flour.

A particularly airy and crisp bake-off result is obtained here with a further preferred embodiment of the method for manufacturing a snack product according to the invention with the feature that the dough body is measured off to a weight of between about 15 and 18 grams, in particular around 16.5 grams, and that the dough body is given an elongate shape, in particular the shape of a baguette or pistolet, with a length of between 7 and 8 centimetres, in particular of about 7.5 centimetres, a maximum width of between about 2.5 and 3.5 centimetres, in particular of around 3 centimetres, and a maximum height of between 2 and 3 centimetres, in particular of around 2.5 centimetres. The addition of rye flour not only imparts flavour but also a better sealing dough which is less susceptible to the penetration of moisture from the filling. This latter does not therefore dry out, while the dough bakes off in nicely crisp manner.

The invention moreover relates to a bread dough and a bread dough body, and will now be further elucidated on the basis of a number of exemplary embodiments and an accompanying drawing. In the drawing:
- figure 1: is a top view of a number of snack products according to the invention;
- figure 2: shows by way of comparison a view of an average conventional 'bitterball' on the same scale as figure 1;
- figure 3: shows a cross-section of the snack product of figure 1; and
- figure 4: shows a longitudinal section transversely of the section of figure 3 of the snack product of figure 1.

It should be noted here that the figures are purely schematic and not all drawn to scale. Some dimensions in particular may be exaggerated to greater or lesser extent for the sake of clarity. Corresponding parts are designated as far as possible in the figures with the same reference numeral.

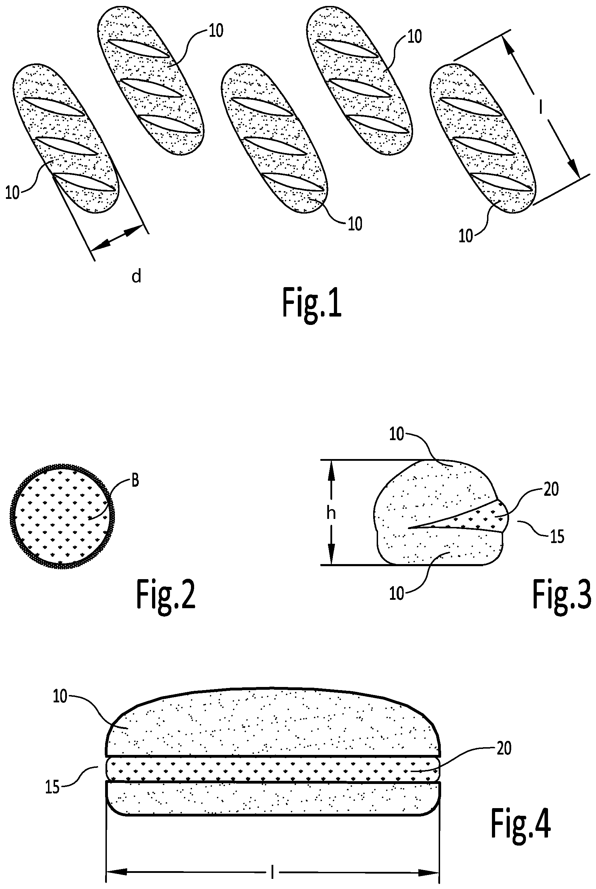

Shown by way of illustration in figure 1 are five snack products 10 according to the invention. This is a set of bread dough bodies with a target weight of less than 20 grams which are shaped as mini-baguettes with the characteristic notches at an angle to a longitudinal direction in the upper part thereof. If desired, a single notch can be arranged instead in the longitudinal direction in order to make the bread dough body look more like so-called pistolets. These mini-baguettes or mini-pistolets have a length 1 of between 7 and 8 centimetres with a cross-section of around 3 centimetres. These mini-rolls are hereby still considerably smaller than the smallest rolls or pistolets now commercially available and have a target weight of around 35 grams at a length of around 20 centimetres. Figure 2 shows by way of comparison a usual 'bitterball' B on the same scale as figure 1, this demonstrating that, with a diameter normally between 3 and 5 centimetres and a target weight of about 20 grams, it has a size similar to that of the mini-pistolets of figure 1.

A cut is made about halfway along in the mini-pistolets, see also figures 3 and 4, and filled with a pasty, i.e. moist and spreadable, filling 20. Use is made here of deep-frozen or chilled fresh dough bodies 10 which are pre-baked before being filled and cooled or deep-frozen. Use is made here of a specific dough composition which forms a crispy crust externally and enhances fixation of the moisture in the filling. The filling does not therefore dry out, or at least less so, and the roll remains crispy on the outside and fresh inside.

The snack product according to the invention is per se suitable for different bread dough compositions and for diverse fillings, for instance of savoury, sweet and/or neutral flavour. For further elucidation of the invention three exemplary embodiments thereof will be set forth in further detail below:

### Exemplary embodiment I Natural:

| | | | |
|---|---|---|---|
| Bread dough: | Wheat flour : | : | 41.0% |
| | Rye flour | : | 2.2% |
| | Oil | : | 1.7% |
| | Leavening | : | 1.7% |
| | Water | : | 25.0% |
| | Other ingredients | : | 3.4% |
| | (Yeast, malt, salt, baking agent, wheat fibre, lecithin, enzymes, broken rye grains) | | |
| | | | 75.0% |
| | | | |
| Filling: | Butter | : | 25.0% |

All ingredients, with the exception of the rye grains, are brought together and kneaded to a smooth dough. After the dough has risen at least once and been kneaded again parts are separated therefrom with a weight (mass) of between 15 and 18 grams, i.e. around a standard weight of about 16.5 grams. Elongate, pistolet-shaped or baguette-shaped bodies are formed therefrom with a length 1 of between 7 and 8 centimetres. The bodies have a width b of between 2.5 and 3.5 centimetres and a similar height h of between 2 and 3 centimetres. The bodies are sprinkled with the rye grains which are pressed on lightly. The thus obtained mini-pistolets or mini-baguettes are pre-baked in an oven for several minutes so that they are cooked but not yet brown or crispy.

The pre-baked bread bodies are then cooled to below about 10 degrees Celsius. The bread bodies can now be further processed or, for later processing, first further deep-frozen and only further processed later after being defrosted. For this further processing a cut is made laterally in the bodies about halfway along their length and filled with a suitable filling which consists in this example of neutral or slightly salted butter. About 5 grams of butter are introduced here per product.

The thus filled mini-pistolets are then cooled further to below -18 degrees Celsius and supplied as deep-frozen semi-product with a long shelf life, or cooled only to between 0 and 5 degrees Celsius and treated as chilled fresh product with limited shelf-life. Half a dozen (six) pieces are for instance used as small packaging, while at least 25 to 150 pieces are packed together as a large packaging. Once they have been deep-frozen, the snack products can be kept for months; as chilled fresh product at between 0 and 5 degrees Celsius they can be kept for several days to weeks.

For (post-)preparation purposes the snack products are baked off for several minutes, for instance 3-4 minutes, in an oven at a temperature of between 200 and 235 degrees Celsius. Deep-frozen snack products can first be defrosted, although this is not essential. The snack products are preferably presented and served adjacently of each other on an attractive dish as shown in figure 1.

### Exemplary embodiment II Spice tapenade:

| | | | |
|---|---|---|---|
| Bread dough: | Wheat flour | : | 41.0% |
| | Rye flour | : | 2.2% |
| | Oil | : | 1.7% |
| | Leavening | : | 1.7% |
| | Water | : | 25.0% |
| | Other ingredients | : | 3.4% |
| | (Yeast, malt, salt, baking agent, wheat fibre, lecithin, enzymes, broken rye grains) | | |
| | | | 75.0% |
| | | | |
| Filling: | Butter | : | 19.0% |
| | Garlic | : | 1.6% |
| | Chopped spring onion | : | 1.1% |
| | Other ingredients | : | 3.3% |
| | (Chopped onion, tarragon, coriander, thyme, dried spices, salt, pepper) | | |
| | | | 25.0% |

Pre-baked dough bodies are formed from the ingredients of the dough in the same manner as described for the first exemplary embodiment. Use is made in this example of a spice tapenade as filling. The ingredients of the filling are for this purpose brought together and mixed thoroughly until a nicely homogenous pasty mass is obtained. The dough bodies are filled herewith. The filling can be injected easily into the incision in the mini-rolls with a suitable dosing device and be dosed here to between 4 and 5 grams per product.

This exemplary embodiment otherwise follows the process described with reference to the first exemplary embodiment.

### Exemplary embodiment III Tomato tapenade:

| | | | |
|---|---|---|---|
| Bread dough: | Wheat flour | : | 39.0% |
| | Rye flour | : | 2.1% |
| | Oil | : | 1.6% |
| | Leavening | : | 1.6% |
| | Water | : | 23.8% |
| | Other ingredients | : | 2.9% |
| | (Yeast, malt, salt, baking agent, wheat fibre, lecithin, enzymes, broken rye grains) | | |
| | | | |
| | | | 71.0% |
| | | | |
| Filling: | Cream cheese | : | 17.4% |
| | Chopped dried tomato | : | 7.0% |
| | Other ingredients | : | 4.6% |
| | (Oil, tarragon, coriander, thyme, dried spices, salt, pepper) | | |
| | | | 29.0% |

Pre-baked dough bodies are formed from the ingredients of the dough in the same manner as described for the first exemplary embodiment. Use is made in this example of a tomato tapenade as filling. The ingredients of the filling are for this purpose brought together and mixed thoroughly until a nicely homogenous pasty mass is obtained. The dough bodies are filled herewith. The filling can be injected easily into the incision in the mini-rolls with a suitable dosing device and be dosed here to between 6 and 7 grams per product.

This exemplary embodiment otherwise follows the process described with reference to the first exemplary embodiment.

Although the invention has been further elucidated above on the basis of only several exemplary embodiments, it will be apparent that the invention is by no means limited thereto. On the contrary, many variations and embodiments are still possible within the scope of the invention for a person with ordinary skill in the art. As well as being formed as pistolet-shaped or baguette-shaped mini-rolls, the bread bodies can also be given another character and/or appearance, such as for instance as mini-ciabatta rolls, mini-croissants or as mini-rolls. Endless variations are also possible in respect of the filling, such as for instance a filling on the basis of a tapenade of olives, optionally with caper, or pate, and sweet fillings are also possible, particularly on the basis of (fresh) fruit. The invention provides an opportunity for a wholly new snack experience as welcome addition to the current range of snacks.

## Claims

1. Snack product comprising an edible body with a filling, **characterized in that** the body comprises a pre-baked bread dough body with a weight of less than about 20 grams, that the bread dough body is provided with a pasty filling and that the bread dough body can be baked off together with the filling in an oven.

2. Snack product as claimed in claim 1, **characterized in that** the bread dough body is elongate, in particular baguette-shaped or pistolet-shaped, and a cut is made therein at the position of the filling.

3. Snack product as claimed in claim 1 or 2, **characterized in that** the dough body has a weight of between 15 and 18 grams, in particular a target weight of around 16.5 grams.

4. Snack product as claimed in claim 3, **characterized in that** the dough body has a length of between 7 and 8 centimetres, in particular a target length of around 7.5 centimetres, and a maximum width of between about 2.5 and 3.5 centimetres, in particular a target width of around 3 centimetres, and a maximum height of between 2 and 3 centimetres, in particular a target height of around 2.5 centimetres.

5. Snack product as claimed in one or more of the foregoing claims, **characterized in that** the filling comprises a savoury filling, in particular a filling comprising at least one ingredient from a group comprising butter, a blend of vegetable oils and/or fats, cream cheese and a tapenade on the basis of olives, capers, herbs and spices, vegetables and/or tomatoes.

6. Snack product as claimed in one or more of the foregoing claims, **characterized in that** the dough comprises a mixture of wheat flour, rye flour and leavening, in particular a mixture with a proportion of 5% to 6% rye flour and a proportion of 4% to 5% leavening relative to the wheat flour.

7. Method for preparing a snack product, **characterized in that** prior to serving a snack product as claimed in one or more of the foregoing claims is baked off for several minutes in an oven at a temperature of 200 to 235 degrees Celsius.

8. Method for manufacturing a snack product, **characterized in that** a bread dough body with a weight of less than about 20 grams is separated from a bread dough, that the dough body is pre-baked and that following cooling a cut is made in the pre-baked dough body which is filled with a pasty filling and subsequently frozen if desired.

9. Method as claimed in claim 8, **characterized in that** a savoury filling is applied as filling, in particular a filling comprising at least one ingredient from a group comprising butter, a blend of vegetable oils and/or fats, cream cheese and a tapenade on the basis of olives, capers, herbs and spices, vegetables and/or tomatoes.

10. Method as claimed in claim 8 or 9, **characterized in that** the bread dough is formed from a mixture of wheat flour and rye flour with the addition of leavening, in particular a mixture with a proportion of 5% to 6% rye flour and a proportion of 4% to 5% leavening relative to the wheat flour.

11. Method as claimed in claim 8, 9 or 10, **characterized in that** the dough body is measured off to a weight of between about 15 and 18 grams, in particular around 16.5 grams, and that the dough body is given an elongate shape, in particular the shape of a baguette or pistolet, with a length of between 7 and 8 centimetres, in particular of about 7.5 centimetres, a maximum width of between about 2.5 and 3.5 centimetres, in particular of around 3 centimetres, and a maximum height of between 2 and 3 centimetres, in particular of around 2.5 centimetres.

12. Bread dough comprising a mixture of wheat flour, rye flour and leavening, in particular a mixture with a proportion of 5% to 6% rye flour and a proportion of 4% to 5% leavening relative to the wheat flour.

13. Bread dough body for applying in the snack product as claimed in one or more of the claims 1 to 6.
